# EUROPEAN PATENT APPLICATION

(11) **EP 1 115 053 A1**
(43) Date of publication of application: **11.07.2001**
(21) Application number: 99913565.0
(22) Date of filing: 07.04.1999
(51) Int. Cl.: G06F 1/16

(54) **ELECTRONIC DEVICE**

(30) Priority: 14.09.1998 JP 26060398
(71) Applicant: FUJITSU LIMITED, Kawasaki-shi, Kanagawa 211-8588 (JP)
(72) Inventor: ITO, Genta, Fujitsu Limited, Kawasaki-shi, Kanagawa 211-8588 (JP); KOMAHARA, Makoto, Fujitsu Personal Comp. Sys. Ltd, Tokyo 206-0801 (JP); TANABE, Shigeki, Fujitsu Limited, Kawasaki-shi, Kanagawa 211-8588 (JP)
(74) Representative: Joly, Jean-Jacques
(86) International application number: JP9901839
(87) International publication number: WO0016184

(57) **Abstract**

A notebook personal computer 50 of a built-in MODEM type has a printed board assembling member 57 incorporated into a notebook personal computer main body 51. A notebook personal computer 80 of a built-in LAN type has a printed board assembling member 82 incorporated into a notebook personal computer main body 51. The printed board assembling member 57 and the printed board assembling member 82 both have a printed board 60. In the printed board assembling member 57, a MODEM module-connector assembling member 61 is attached to the printed board 60. In the printed board assembling member 82, a LAN module-connector assembling member 83 is attached to the printed board.

## Description

### TECHNICAL FIELD

The present invention generally relates to electronic apparatuses, and, more particularly, to a portable electronic apparatus.

When portable electronic apparatuses (notebook personal computers, for instance) are to be put on the market, a plurality of models with respect to communication functions are generally prepared, through they have the same appearances, in response to various needs from users. For example, such portable electronic apparatuses include a built-in MODEM type and a built-in LAN type. In such a case, it is desirable that the productivity is high. Also, it is preferable that a user who has purchased a notebook personal computer can change the communication functions of the notebook personal computer.

### BACKGROUND ART

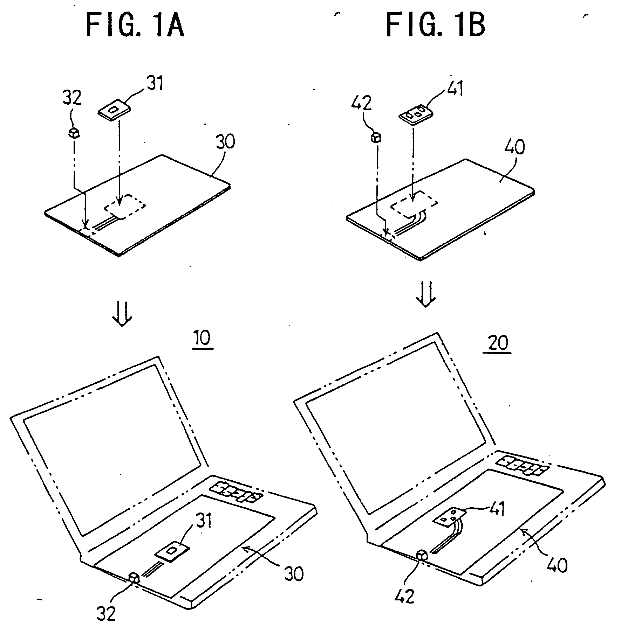

FIG. 1A shows a notebook personal computer 10 of a conventional built-in MODEM type, and FIG. 1B shows a notebook personal computer 20 of a conventional built-in LAN type. The notebook computers 10 and 20 are different in the printed board incorporated inside. A printed board 30 incorporated in the notebook personal computer 10 has a MODEM module and a MODEM connector mounted thereon. A printed board 40 incorporated in the notebook personal computer 20 has a LAN module and a LAN connector mounted thereon. More specifically, the printed board 30 having a MODEM module and a MODEM connector soldered thereto is incorporated in the notebook personal computer 10. The printed board 40 having a LAN module 41 and a LAN connector 42 soldered thereto is incorporated in the notebook personal computer 20.

In a case where the notebook personal computers 10 and 20 are mass-produced at a factory, both the printed board 30 for the built-in MODEM type and the printed board 40 for the built-in LAN type are designed and produced, and the two types of printed boards need to be put under stock control, which presents a problem in mass productivity.

Furthermore, in a case where a user who has purchased a notebook personal computer of the built-in MODEM type changes the communication function from the MODEM type to the LAN type as the use of the notebook personal computer changes, it is necessary to change the printed boards by removing the printed board 30 and attaching the printed board 40 to which the LAN module 41 and the LAN connector 42 are soldered.

### DISCLOSURE THE INVENTION

The principal object of the present invention is to provide an electronic apparatus in which the above problems can be eliminated.

A more specific object of the present invention is to provide an electronic apparatus that facilitates inventory control and increases productivity accordingly in the production at a factory.

Another specific object of the present invention is to provide an electronic apparatus that easily allows a user to make a change to the functions of the electronic apparatus.

Yet another specific object of the present invention is to provide an electronic circuit assembling member used in an electronic apparatus that increases productivity and facilitates the function change process.

The above objects of the present invention are achieved by an electronic apparatus that includes a main electronic circuit assembling member that has a circuit common to a plurality of function, and a sub electronic circuit assembling member that has different electronic circuit parts for the functions and is detachably connected to the main electronic circuit assembling member.

According to the present invention, the sub electronic circuit assembling member having different circuit parts for different functions is detachably connected to the main electronic circuit assembling member, so that the main electronic circuit assembling member is shared by the circuit parts for different function.

Also, a user can exchange a currently attached sub electronic circuit assembling member for a sub electronic circuit assembling member of another type.

In the electronic apparatus of the present invention, the sub electronic circuit assembling member is disposed at a location that is exposed when the cover of the electronic apparatus main body is removed. Thus, by removing the cover from the electronic apparatus main body, a user can bring his/or her fingers close to the sub electronic circuit assembling member.

The above objects of the present invention are achieved by an electronic circuit assembling member that includes different electronic circuit parts for different functions and is detachably connected to a main electronic circuit assembling member that has a circuit common to a plurality of functions incorporated in an electronic apparatus.

When a user purchases this electronic circuit assembling member and attaches to the main electronic circuit assembling member, thereby changing the functions of an electronic apparatus.

The present invention can also be embodied in the following manners.

An electronic apparatus of the present invention includes an electronic apparatus main body and a printed board assembling member that is accommodated in the electronic apparatus main body. In this electronic apparatus, the printed board assembling member has a communication function assembling member of one type that can be exchanged for a different type, the communication function assembling member being detachably attached to a printed board.

With the communication function assembling member of one type that can be exchanged for another type being detachably attached, the printed board can be common to both an electronic apparatus of a built-in MODEM type and an electronic apparatus of a built-in LAN type.

Also, a user can exchange a currently attached communication function assembling member for a communication function assembling member of another type.

The communication function assembling member is disposed at a location that is exposed when a cover at the bottom surface of the electronic apparatus main body is removed.

By removing the cover from the bottom surface of the electronic apparatus main body, a user can bring his/her fingers close to the communication function assembling member.

Furthermore, the communication function assembling member can be screwed to the printed board.

By loosening and removing the screws to pull out a connector, the communication function assembling member can be detached from the printed board.

Furthermore, the communication function assembling member may be a MODE module-connector assembling member constituted by a MODEM connector and a MODEM module, or a LAN module-connector assembling member constituted by a LAN connector and a LAN module.

The communication function assembling member may also be made up of a MODEM connector and a MODEM module having a MODEM circuit, and detachably attached to a printed board incorporated into an electronic apparatus.

In this structure, a user can detach the MODEM module-connector assembling member from the printed board.

The communication function assembling member may also be made up of a LAN connector and a LAN module having a LAN circuit, and detachably attached to a printed board incorporated into an electronic apparatus.

In this structure, a user can detach the LAN module-connector assembling member form the printed board.

### BRIEF DESCRIPTION OF THE DRAWINGS

FIG. 1A shows a notebook personal computer of a conventional built-in MODEM type, and FIG. 1B shows a notebook personal computer of a conventional built-in LAN type;
FIG. 2 illustrates the production of a notebook personal computer of one embodiment of the present invention;
FIG. 3A shows a MODEM module-connector assembling member seen from obliquely below, FIG. 3B is a side view of the MODEM module-connector assembling member, and FIG. 3C is an exploded view of the MODEM module-connector assembling member seen from obliquely above a MODEM connector in a direction indicated by the arrow C in FIG. 3A;
FIG. 4 shows the MODEM module-connector assembling member prior to a screw tightening process;
FIG. 5A is a bottom view of a notebook personal computer of a built-in MODEM type of the present invention, and FIG. 5B is a side view of the notebook personal computer;
FIG. 6A shows a LAN module-connector assembling member seen from obliquely below, FIG. 6B is a side view of the LAN module-connector assembling member, and FIG. 6C is an exploded view of the LAN module-connector assembling member seen from obliquely above a LAN connector in the direction indicated by the arrow C in FIG. 6A;
FIG. 7 shows the LAN module-connector assembling member prior to a screw tightening process; and
FIG. 8A is a bottom view of a notebook personal computer of a built-in LAN type of the present invention, and FIG. 8B is a side view of the notebook personal computer.

### PREFERRED EMBODIMENTS FOR CARRYING OUT THE INVENTION

The following is a description of embodiments of the present invention, with reference to the accompanying drawings.

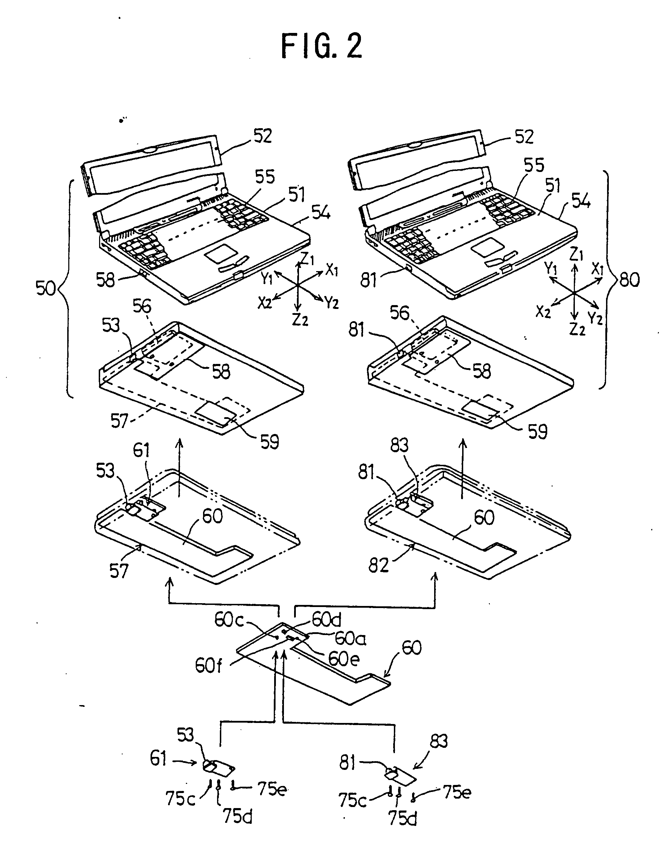

Referring to FIG. 2, the production of a notebook personal computer as one embodiment of the present invention will be described. In FIGS. 2 to 88, X1 and X2 indicate the width direction, Y1 and Y2 indicate the depth direction, Z1 indicates the upward direction, and Z2 indicates the downward direction.

Reference numeral 50 indicates a notebook personal computer of a built-in MODEM type as an electronic apparatus, which comprises a computer main body 51 and a liquid crystal display panel unit 52 that can be rotationally opened. A MODEM connector (RJ11) 53 is attached to a side surface of the computer main body 51. The computer main body 51 has a keyboard unit 55 on the upper surface of a flat housing 54, and inside the housing 54, a hard disk drive 56 and a printed board assembling member 57 are incorporated in the main body 51. Reference numeral 58 indicates a cover for covering the hard disk drive 56. This cover 58 is screwed to the bottom surface of the computer main body 51. A battery 59 is attached also to the bottom surface of the computer main body 51.

The printed board assembling member 57 has a MODEM module-connector assembling member 61 that is one of communication function assembling members attached to one end of a main printed board 60. The printed board 60 has the same structure as a normal printed board incorporated in a notebook personal computer, without a communication function circuit. Also, the printed board 60 has a protruding portion 60a, and cylindrical pillar members 60c, 60d, and 60e that serve as female screws are fixed to the lower surface of the protruding portion 60a at the locations corresponding to holes 70c, 70d, and 70e of a printed board 70 mentioned later. Further, a connector 60f that protrudes in the Z2 direction is attached to the lower surface of the protruding portion 60a.

Reference numeral 80 indicates a notebook personal computer of a built-in LAN type as an electronic apparatus, and a LAN connector (RJ45) 81 is attached to a side surface of the computer main body 51. The notebook personal computer 80 has the same structure as the notebook personal computer 50 of the built-in MODEM type, except for a printed board assembling member 82, and like components are denoted by like reference numerals. The printed board assembling member 82 has a LAN module-connector assembling member 83 that is another communication function assembling member and attached to the main printed board 60. Comparing the printed board assembling member 81 with the printed board assembling member 57, the main printed boards 60 are the same, while the MODEM module-connector assembling member 61 and the LAN module-connector assembling member 83 are different.

Accordingly, by the comparison between the notebook personal computer 50 of the built-in MODEM type and the notebook personal computer 80 of the built-in LAN type, differences are found only between the MODEM module-connector assembling member 61 and the LAN module-connector assembling member 83, and the printed boards 60 are the same. In a case where the notebook personal computers 50 and 80 of the two different types, the main printed boards of one type are designed and produced, and the printed boards 60 are put under stock control. Compared with the prior art in which printed boards of two difference types are designed and produced, and separately put into stock control, the mass productivity can be increased.

The printed board 60 is equivalent to the main electronic circuit assembling member in the claims of the present invention, and the MODEM module-connector assembling member 61 and the LAN module-connector assembling member 83 are equivalent to the sub electronic circuit assembling member in the claims of the present invention.

Next, the MODEM module-connector assembling member 61 will be described.

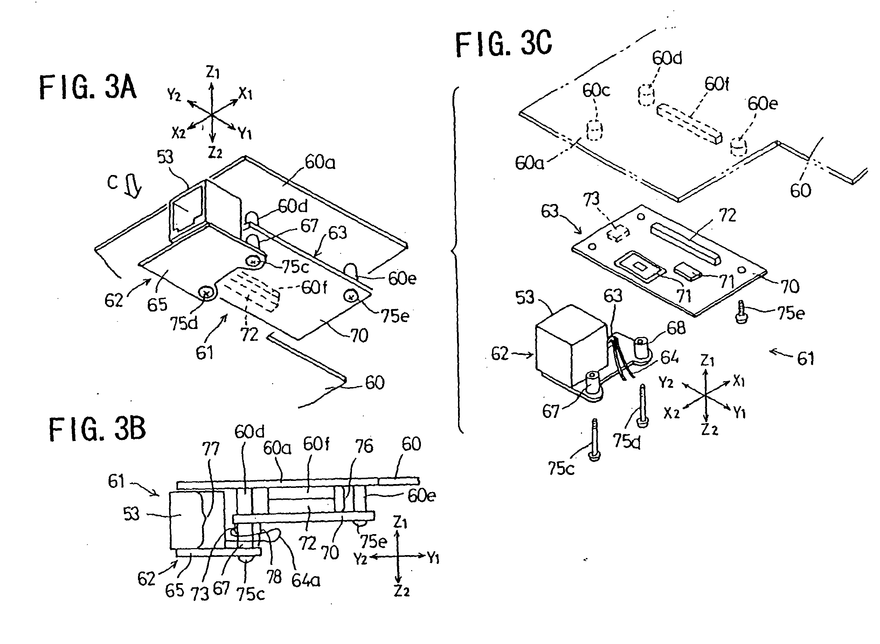

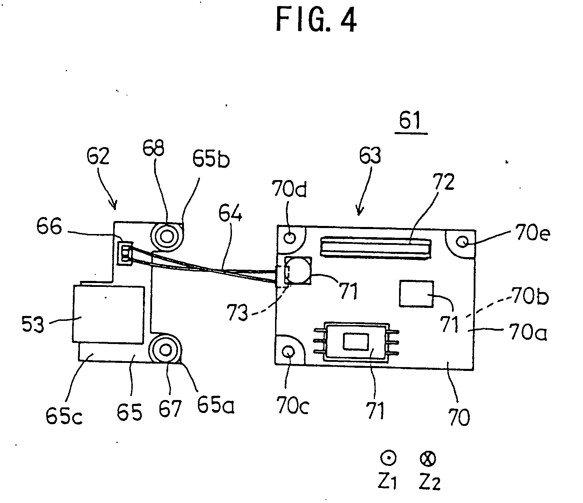

FIG. 3A is a perspective view of the MODEM module-connector assembling member 61 seen from obliquely below. FIG. 3B is a side view of the MODEM module-connector assembling member 61. FIG. 3C is an exploded perspective view of the MODEM module-connector assembling member 61 seen from obliquely above in the direction indicated by the arrow C in FIG. 3A. FIG. 4 shows the MODEM module-connector assembling member 61 prior to tightening the screws.

The MODEM module-connector assembling member 61 comprises a MODEM connector board 62, a MODEM module 63, a cable 64, as shown in FIG. 4.

The MODEM connector board 62 comprises a board 65, the MODEM connector 53, a connector 66, cylindrical spacer members 67 and 68. The board 65 is larger than the MODEM connector 53, and has two protruding portions 65a and 65b. The protruding portions 65a and 65b have the spacer members 67 and 68 standing therefrom, respectively. The MODEM connector 53 is soldered to the upper surface 65c of the board 65. The connector 66 is located next to the MODEM connector 53, soldered to the upper surface 65c of the board 65, and electrically connected to the MODEM connector 53.

The MODEM module 63 comprises the rectangular printed board 70, a plurality of electronic parts 71, a connector 72, and another connector 73. The printed board 70 and the plurality of electronic parts 71 constitute the MODEM circuit. The connector 72 stands from the upper surface 70a of the printed board 70 in the Z1 direction at a location in parallel with one long side of the upper surface 70a. The connector 73 is transversely mounted on the lower surface 70 of the printed board 70. The printed board 70 has the holes 70c, 70d, and 70e at three of the four corners.

One end of the cable 64 is connected to the connector 66, while the other end of the cable 64 is connected to the connector 73. The MODEM module 63 and the MODEM connector board 62 are electrically connected to each other by the cable 64.

In the MODEM module 63, the connector 72 is connected to the connector 60f, and the printed board 70 is in contact with the lower end surfaces of the pillar members 60c, 60d, and 60e in such a manner that the holes 70c, 70d, and 70e face the pillar members 60c, 60d, and 60e, respectively. The MODEM connector board 62 is screwed to the lower surface of the protruding portion 60a of the printed board 60 by a screw 75c screwed into the pillar member 60c through the spacer member 67 and the hole 70c, a screw 75d screwed into the pillar member 60d through the spacer member 68 and the hole 70d, and a screw 75e screwed into the pillar member 60e through the hole 70e, with the spacer members 67 and 68 facing the holes 70c and 70e. Reference numeral 64a indicates a bent extra length of the cable 64.

The printed board 60, the MODEM module 63, and the MODEM connector board 62 constitute a layered structure. A space 76 having a height corresponding to each length of the pillar members 60c, 60d, and 60e is formed between the printed boards 60 and 70. Within the space 76, the connector 72 is connected to the connector 60f, and the plurality of electronic parts 71 on the upper surface side of the printed board 70 are accommodated. A space 77 having a height corresponding to the total of the length of each of the pillar members 60c and 60d and the length of each of the spacer members 67 and 68 is formed between the board 65 and the printed board 60. The space 77 is large, and within the space 77, the MODEM connector 53 is accommodated. A space 78 corresponding to the length of each of the pillar members 60c and 60d is formed between the board 65 and the printed board 70. The extra length 64a of the cable 64 extends through the space 78 in the Y1 direction.

Next, the removal of the MODEM module-connector assembling member 61 will be described.

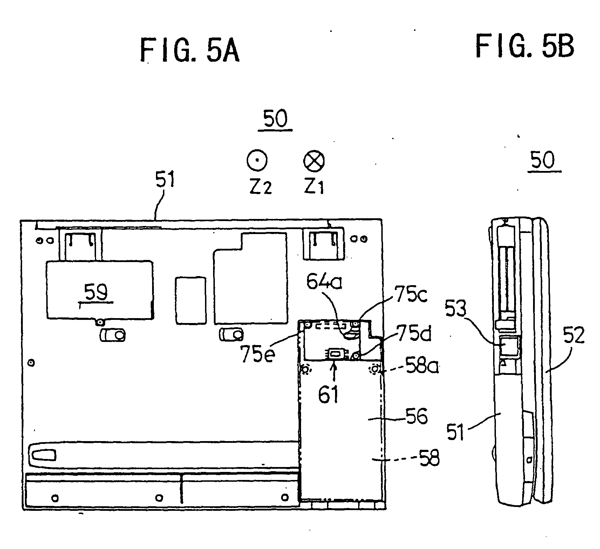

As shown in FIGS. 2 and 5A, the MODEM module-connector assembling member 61 is located in contact with the hard disk drive 56 in the Y1 direction. The cover 58 is large enough to cover the hard disk drive 56 and the MODEM module-connector assembling member 61. As the cover 58 is removed by loosening the screw 58a, the MODEM module-connector assembling member 61 is exposed, as shown in FIG. 5A. Thus, a user can bring his/her fingers close to the MODEM module-connector assembling member 61. A user of the notebook personal computer 50 removes the cover 58, and loosens the screws 75c, 75d, and 75e. The user then pulls the MODEM module 63 in the Z2 direction, so that the connector 72 is detached from the 60f. Thus the MODEM module-connector assembling member 61 is removed from the printed board 60.

As mentioned later, the LAN module-connector assembling member 83 is attached to the printed board 60 by screws, like the MODEM module-connector assembling member 61.

The MODEM module-connector assembling member 61 is screwed to the printed board 60 at such a location as to be exposed when the cover 58 is removed. The LAN module-connector assembling member 83 is also screwed to the printed board 60. Therefore, in a case where a user is to change the notebook personal computer 50 of the built-in MODEM type to the built-in LAN type, the user can exchange the MODEM module-connector assembling member 61 for the LAN module-connector assembling member 83. In this manner, the user can change the notebook personal computer 50 from the built-in MODEM type to the built-in LAN type.

The screws 75c and 75d simultaneously tighten the MODEM module 63 and the MODEM connector board 62. Accordingly, the number of screws is as small as 3.

Next, the LAN module-connector assembling member 83 will be described.

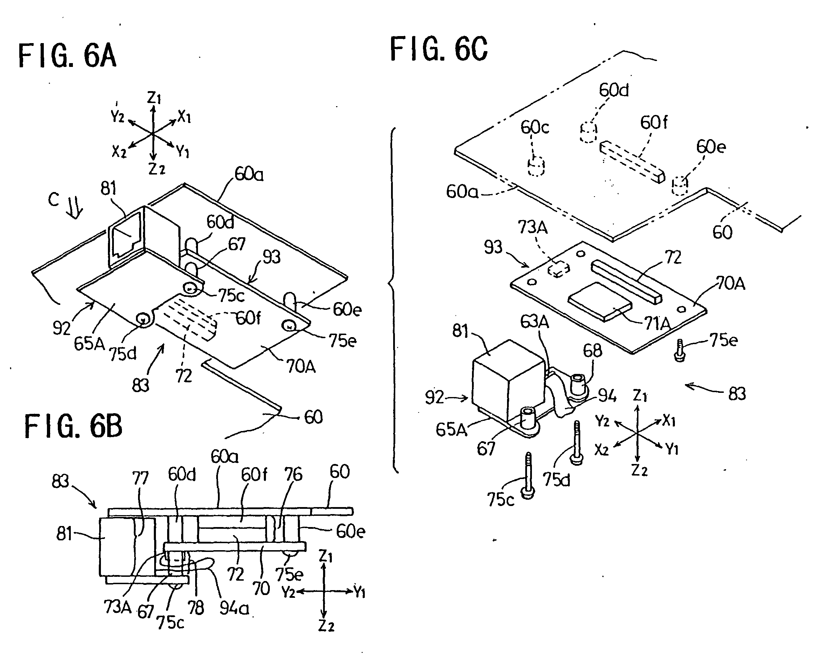

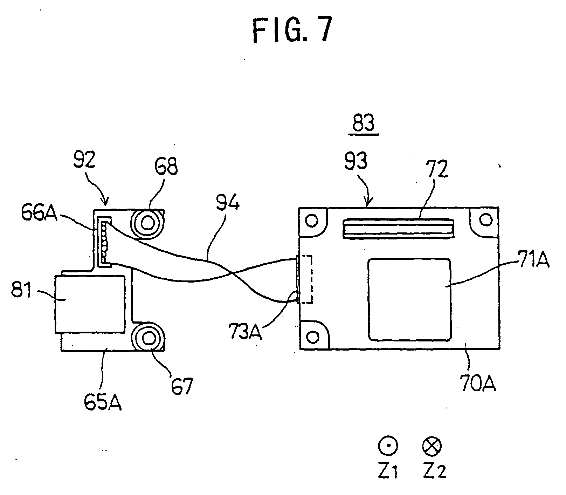

FIG. 6A is a perspective view of the LAN module-connector assembling member 83 seen from obliquely below, and FIG. 6B is aside view of the LAN module-connector assembling member 83. FIG. 6C is an exploded perspective view of the LAN module-connector assembling member 83 seen from obliquely above the LAN connector 81 in the direction indicated by the arrow C in FIG. 6A. FIG. 7 shows the LAN module-connector assembling member 83 prior to the screw tightening process.

The LAN module-connector assembling member 83 has a structure similar to the MODEM module-connector assembling member 61. In FIGS. 6A to 7, the same components as in FIGS. 3A to 4 are denoted by the same reference numerals, and components equivalent to the components shown in FIGS. 3A to 4 are denoted by the same reference numerals further provided with "A".

The LAN module-connector assembling member 83 comprises a LAN connector board 92, a LAN module 93, and a flexible cable 94.

The LAN connector board 92 comprises a board 65A, the LAN connector 81, a connector 66A, and the cylindrical spacer members 67 and 68. The LAN connector 81 is soldered to the board 65A. The LAN module 93 comprises a rectangular printed board 70A, a plurality of electronic parts 71A, the connector 72, and a connector 73A. The printed board 70A and the plurality of electronic parts 71A located on and under the printed board 70A constitute a LAN circuit.

One end of the flexible cable 94 is connected to the connector 66, while the other end is connected to the connector 73A. The LAN module 93 and the LAN connector board 62 are electrically connected to each other by the flexible cable 94.

The LAN module 93 is fixed to the pillar members 60c, 60d, and 60e by the screws 75c, 75d, and 75e, respectively. The LAN connector board 92 is fixed to the pillar members 60c and 60d. The connector 72 is connected to the connector 60f. The electric part 71a on the upper surface of the printed board 70A is accommodated in the space 76, and the LAN connector is accommodated in the space 77. A bent extra length 92a of the flexible cable 94 extends in the Y1 direction through the space 78.

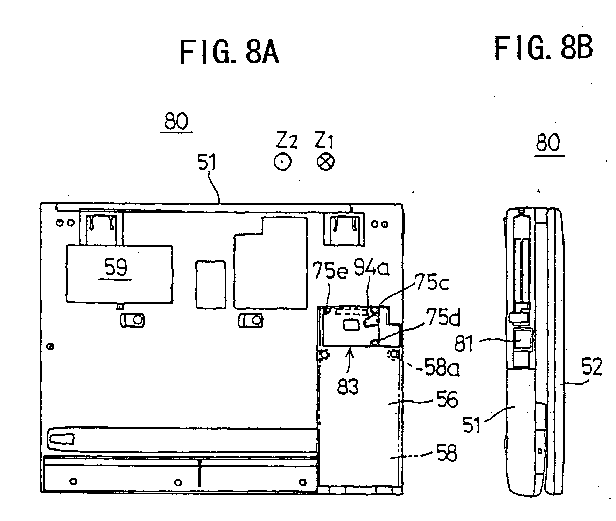

The LAN module-connector assembling member 83 is disposed at a location adjacent to the hard disk drive 56 in the Y1 direction, as shown in FIGS. 2 and 8A.

Next, the removal of the LAN module-connector assembling member 83 will be described.

When the cover 58 is removed, the LAN module-connector assembling member 83 is exposed, as shown in FIG. 8A, and a user can bring his/her fingers close to the MODEM module-connector assembling member 61. By loosening the screws 75c, 75d, and 75e, and forcibly pulling the LAN module-connector assembling member 83 in the Z2 direction, the connector 72 is removed from the connector 60f, so that the LAN module-connector assembling member 83 is detached from the printed board 60.

The MODEM module-connector assembling member 61 is screwed to the printed board 60.

In a case where a user is to change the notebook personal computer 80 from the built-in LAN type to the built-in MODEM type, the user can exchange the MODEM module-connector assembling member 61 for the LAN module-connector assembling member 83.

Accordingly, the user can change the types of the communication function of the notebook personal computer, and the changing process is easy. In this aspect, the notebook personal computers 50 and 80 are characterized in that a user can change the usage purposes of the computers.

Accordingly, even if a user has a plan to change the use of a notebook computer, he/she can purchase a notebook personal computer that meets the current purposes. Thus, in accordance with the present invention, notebook personal computers that users do not hesitate to purchase can be produced.

When the LAN module-connector assembling member 83 is attached to a location from which the MODEM module-connector assembling member 61 has been removed, or when the MODEM module-connector assembling member 61 is attached to a location from which the LAN module-connector assembling member 83 has been removed, the MODEM module 63 or the LAN module 93 is pressed against the printed board 60, so that the connector 72 is engaged with the connector 60f, and the MODEM module 63 or the LAN module 93 is temporarily secured. Accordingly, the screw tightening process can be easily performed.

Although the above embodiment involves the MODEM module-connector assembling member 61 and the LAN module-connector assembling member 83, assembling members of other types may be employed in the same manner and have the same effects as described above.

Also, the MODEM module-connector assembling members 61 and the LAN module-connector assembling member 83 may be attached to the printed board 60 by any component other than screws, as long as it is detachable.

The present invention can be embodied in the following manners.

An electronic apparatus of the present invention comprises an electronic apparatus main body and a printed board assembling member accommodated in the electronic apparatus main body, and the printed board assembling body has a communication function assembling member detachably attached to the printed board. The communication function assembling member can be exchanged for a different type.

With the communication function assembling member being detachably attached to the printed board, the printed board can be used commonly for both an electronic apparatus of a built-in MODEM type and an electronic apparatus of a built-in LAN type.

Also, a user can exchange a currently attached communication function assembling member for a communication function assembling member of another type.

The communication function assembling member is located in such a position as to be exposed when the cover on the bottom surface of the electronic apparatus main body is removed.

By removing the cover from the bottom surface of the electronic apparatus main body, a user can bring his/her fingers close to the communication function assembling member.

The communication function assembling member is screwed to the printed board.

By loosening the screws to pull out the connector, the communication function assembling member can be detached from the printed body.

Furthermore, the communication function assembling body may be a MODEM module-connector assembling member constituted by a MODEM connector and a MODEM module, or a LAN module-connector assembling member constituted by a LAN connector and a LAN module.

Also, the communication function assembling member may be a MODEM module comprising a MODEM connector and a MODEM circuit, and detachably attached to a printed board incorporated into an electronic apparatus.

A user can detach such a MODEM module-connector assembling member from the printed board.

Also, the communication function assembling member may a LAN module comprising a LAN connector and a LAN circuit, and detachably attached to a printed board incorporated into an electronic apparatus.

A user can detach such a LAN module-connector assembling member from the printed board.

As described so far, an electronic apparatus of the present invention comprises a main electronic circuit assembling member that includes a circuit common to a plurality of functions, and a sub electronic circuit assembling member that includes different electronic circuit parts for different functions and is detachably connected to the main electronic circuit assembling member.

Since the sub electronic circuit assembling member including the different electronic circuit parts is detachably connected to the main electronic circuit assembling member, it is possible to use the main electronic circuit assembling member commonly for different sub electronic circuit assembling members. Accordingly, when electronic apparatuses of different types are mass-produced at a factory, only one type of main electronic circuit assembly member needs to be designed, and the inventory control should be conducted only for one type of main electronic circuit assembly member. In the prior art, on the other hand, it is necessary to design and produce electronic circuit assembling members of different types, and to put the electronic circuit assembling members of different types separately under inventory control. Compared with the prior art, the present invention can increase the productivity of electronic apparatuses, and reduce the production costs.

Also, a user can exchange a currently attached sub electronic circuit assembling member for a sub electronic circuit assembling member of another type. Thus, the types of the electronic apparatus can be changed by a user.

Also, since the sub electronic circuit assembling member is located in such a position as to be exposed when the cover is removed from the electronic apparatus main body, a user can bring his/her finger close to the sub electronic circuit assembling member by removing the cover from the electronic apparatus main body. Thus, a user can easily exchange a currently attached sub electronic circuit assembling member for a sub electronic circuit assembling member of another type.

Also, the present invention provides an electronic circuit assembling member which comprises different electronic parts for different functions and is detachably connected to the main electronic circuit assembling member having a circuit common to a plurality of functions incorporated into the electronic apparatus. Accordingly, it is possible for a user to change the functions of an electronic apparatus by purchasing and attaching this electronic circuit assembling member to the main electronic circuit assembling member of the electronic apparatus.

It should be noted that the present invention is not limited to the embodiments described above, but various changes and modifications can be made without departing from the scope of the claimed invention.

## Claims

1. An electronic apparatus comprising:
a main electronic circuit assembling member having a circuit common to a plurality of functions; and
a sub electronic circuit assembling member that includes different electronic circuit parts corresponding to different functions, and is detachably connected to the main electronic assembling member.

2. The electronic apparatus as claimed in claim 1, wherein the sub electronic circuit assembling member is disposed at a location that is exposed when a cover is removed from an electronic apparatus main body.

3. An electronic circuit assembling member, which comprises different circuit components for different functions, and is detachably connected to a main electronic circuit assembling member that includes a circuit common to a plurality of functions incorporated in an electronic apparatus.

4. An electronic apparatus, comprising:
an electronic apparatus main body; and
a printed board assembling body that accommodated in the electronic apparatus,
wherein a communication function assembling member of one type that can be exchanged for another type are detachably attached to a printed board of the printed board assembling member.

5. The electronic apparatus as claimed in claim 4, wherein the communication function assembling member is disposed at a location that is exposed when a cover is removed from a bottom surface of the electronic apparatus main body.

6. The electronic apparatus as claimed in claim 4, wherein the communication function assembling member is screwed to the printed board.

7. The electronic apparatus as claimed in claim 4, wherein the communication function assembling member is a MODEM module-connector assembling member constituted by a MODEM connector and a MODEM module, or a LAN module-connector assembling member constituted by a LAN connector and a LAN module.

8. An electronic circuit assembling member, which comprises a communication function assembling member for different functions and is detachably connected to a main electronic circuit assembling member that includes a circuit common to a plurality of functions incorporated in an electronic apparatus.

9. The electronic circuit assembling member as claimed in claim 8, wherein the communication function assembling member is a MODEM module-connector assembling member constituted by a MODEM connector and a MODEM module, or a LAN module-connector assembling member constituted by a LAN connector and a LAN module.
